# EUROPEAN PATENT APPLICATION

(11) **EP 2 779 802 A2**
(43) Date of publication of application: **17.09.2014**
(21) Application number: 14159930.8
(22) Date of filing: 14.03.2014
(51) Int. Cl.: H05B 37/02

(54) **Systems and methods for providing a preview bar of a light show**

(30) Priority: 15.03.2013 US 201313838924
(71) Applicant: ABL IP Holding LLC, Conyers GA 30012 (US)
(72) Inventor: Hickok, John T., Social Circle, GA Georgia 30016 (US); Norton, Mark, Covington, GA Georgia 30016 (US); Westrick, Richard L., Conyers, GA Georgia 30012 (US)
(74) Representative: Thompson, Andrew John

(57) **Abstract**

A lighting management system for managing a light show displayed by at least one lighting fixture. The lighting management system includes a controller configured to receive at least one input related to a light show via one or more input devices coupled to the controller. The controller generates a light show based on the at least one input and renders a preview of the light show in a preview bar on a display device associated with the controller.

## Description

### FIELD OF THE INVENTION

The present invention is directed to rendering a preview bar depicting a preview of a light show.

### BACKGROUND

Conventional lighting systems provide users with the ability to define one or more aspects of a light show to be displayed by one or more lighting devices. The user can verify that the light show is accurate or otherwise acceptable only after the lighting devices play back the light show. For example, the user may define the colors, a sequence of colors, a time where each color should be displayed and an overall duration of the light show. The lighting devices receive the user requests and display the light show as defined by the user. For example, the lighting devices may receive an instruction at various time intervals to display a certain color at a certain intensity level and/or having some other visual effect. The user may then view the light show and make any desired adjustments to the light show. For instance, the user may provide the inputs related to the light show again, view the light show again and make any desired adjustments. The user may repeat this approach until the light show is acceptable for the user. In the case of a complicated light show, it would be simpler and less time consuming if the user can verify and edit the light show without waiting for the lighting devices to play back the defined light show.

### SUMMARY

Aspects of the invention provide systems and methods for previewing a light show to be displayed by at least one lighting fixture.

In one aspect, a system is provided. The system comprises at least one lighting fixture and a controller for managing the at least one lighting fixture. Additionally, the controller is configured to receive at least one input associated with a light show and generate the light show to be displayed by the at least one lighting fixture based on at least one input. The controller is also configured to display, on a display device associated with the controller, a preview bar that depicts a preview of the light show to be displayed by the at least one lighting fixture.

In another aspect, a method is provided. The method comprises receiving, via one or more input devices, at least one input related to a light show and defining, via a controller, a light show to be displayed by at least one lighting fixture. Additionally, the method comprises rendering, on a display device associated with the controller, a preview of the light show in a preview bar.

In another aspect, a device is provided. The device is configured to render a preview of a light show on a display device, the preview being depicted in a preview bar included in a user interface rendered on the display device. The device is additionally configured to transmit the light show to at least one lighting fixture, the light show comprising at least a sequence of colors and a plurality of timing information related to the sequence of colors.

These and other aspects, features and advantages of the present invention may be more clearly understood and appreciated from a review of the following detailed description and by reference to the appended drawings and claims.

### BRIEF DESCRIPTION OF THE DRAWINGS

Figure 1 is a diagram illustrating an example of a light show management system according to one aspect.
Figure 2 is an illustration of an example user interface rendered on a display device for managing a light show to be displayed by at least one lighting fixture.
Figure 3 is another illustration of an example user interface rendered on the display device for managing a light show to be displayed by at least one lighting fixture.
Figure 4 is a flowchart illustrating one embodiment of the controller in the light show management system.
Figure 5 is a flowchart illustrating another embodiment of the controller in the light show management system.

### DETAILED DESCRIPTION

Certain aspects of the present invention disclose rendering a preview bar in a display associated with a controller for previewing a light show displayed by at least one lighting fixture. Disclosed are embodiments for generating a preview of the light show based on certain inputs related to the light show. The preview of the light show is represented in a preview bar which may be accessible independently of a light show being displayed by at least one lighting fixture. For example, the lighting fixtures may be playing a light show while other light shows may be previewed via the preview bar.

A user may provide one or more inputs to the controller via one or more input devices, such as a touch screen associated with a display. These inputs may be related to the light show, such as a duration of the light show, specific colors to be displayed during the light show, a sequence of the colors to be displayed during the light show, a length of time each color should be displayed, a transition time for transitioning between the specified colors during the light show, an intensity of the light, whether to continuously play the light show, a number of times to play the light show, and/or any other input. In some embodiments, the user may provide one or more inputs to select a number of lighting fixtures to use for displaying the light show. For example, the user may provide one or more inputs related to a number, location, type, and/or otherwise select a set of lighting fixtures for displaying the light show. In some embodiments, the user may provide one or more inputs to cause all selected fixtures to be controlled together and simultaneously display the same color and intensity; in other embodiments, the user may provide inputs to cause individual fixtures or subsets of fixtures to display different colors and intensities at different times as part of the light show sequence.

The controller generates the light show based on the inputs and renders the preview bar on the display. In one embodiment, the preview bar includes at least one step where each step corresponds to a color and an amount of time. The color of each step may be one of the colors received via user input or an intermediary color that appears between two of the received colors. For instance, the intermediary color may be displayed by the lighting fixtures while transitioning from a first received color to a second received color. In some embodiments, the intermediary color may be a color that appears at a location on the color spectrum between two of the received colors based on a specified transition time for transitioning between the two received colors. For example, the intermediary color for a respective step may appear at a location at half the distance on the color spectrum between the two received colors when half of the transition time for transitioning between the two received colors has elapsed. Additionally, the time associated with the step represents an amount of time that the color of the respective step is displayed by the lighting fixture. In some embodiments, the size of the step in the preview bar is based on the amount of time that is associated with the step. For example, if a particular color is to be displayed by the lighting fixtures for a time that corresponds to 10% of the duration of the light shown, then the step associated with the respective color stop occupies 10% of the space in the preview bar.

In addition to the preview bar, the controller renders a user interface for a user to create or edit the light show. For instance, the user may adjust the duration of the light show, a sequence of colors appearing in the light show, the colors of the light show, transition times between colors of the light show, and/or make other adjustments to the light show. Additionally, the user may manually adjust the intermediary colors and/or the colors received via the input. In response to the adjustments, the controller may dynamically modify the preview bar to reflect the effect of the adjustments requested by the user in the preview bar.

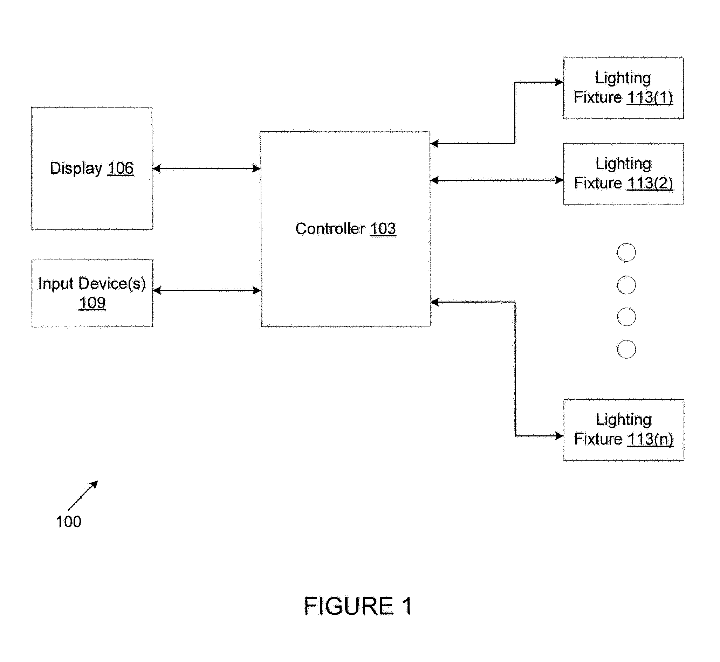

FIG. 1 shows a light show management system 100 comprising a controller 103, a display 106, one or more input devices 109, and a plurality of lighting fixtures 113(l)-113(n). In one embodiment, the controller 103 manages one or more light shows displayed by lighting fixtures 113. For example, a user may provide inputs related to a light show via one or more input devices 109 or by manipulating a user interface rendered on the display 106. The display 106 may be a touch screen device that is configured to receive user input. The controller 103 receives the input related to the light show and generates a light show to be displayed by the lighting fixtures 113. The light show may include one or more instructions to the lighting fixtures 113 for displaying light having a specified color, at a specified intensity, for a specified duration, and/or other types of instructions, as discussed herein.

In one implementation, the controller 103 is embodied as an application or other software module residing in a memory of a device that executes the application. For example, the application may reside in a computer-readable medium and execute on a suitable processor. Such a processor may comprise a microprocessor, an ASIC, a state machine, or other processor, and can be any of a number of computer processors. Additionally, the processor may be in communication with the computer-readable medium which stores instructions and other components such that when executed by the processor, cause the processor to perform the steps and methods described herein. The computer-readable medium may include an electronic, optical, magnetic, or other storage device capable of providing the processor with computer-readable instructions. Other examples include a floppy disk, CR-ROM, DVD, magnetic disc, memory chip, ROM, RAM, optical storage, magnetic tape or other media from which a computer processor can read instructions and/or access information. Further, the instructions stored on the computer-readable medium may include processor-specific instructions generated by a compiler and/or an interpreter from code written in any suitable computer-programming language, including for example, C, C++, C#, Visual Basic, Java, Python, Pert, JavaScript, and ActionScript.

The lighting fixtures 113 may be light emitting devices such as light emitting diodes (LEDs), fluorescent lamps, organic LEDs, and/or other types of light emitting devices. The lighting fixtures 113 may be configured to display a spectrum of colors. For example, the current being supplied to the LEDs or a subset of the LEDs may be adjusted or modulated to emit one of the colors of the spectrum. In one embodiment, the controller 103 transmits an instruction to the LEDs comprising one or more current adjustments for instructing the LEDs to display a respective color in the spectrum.

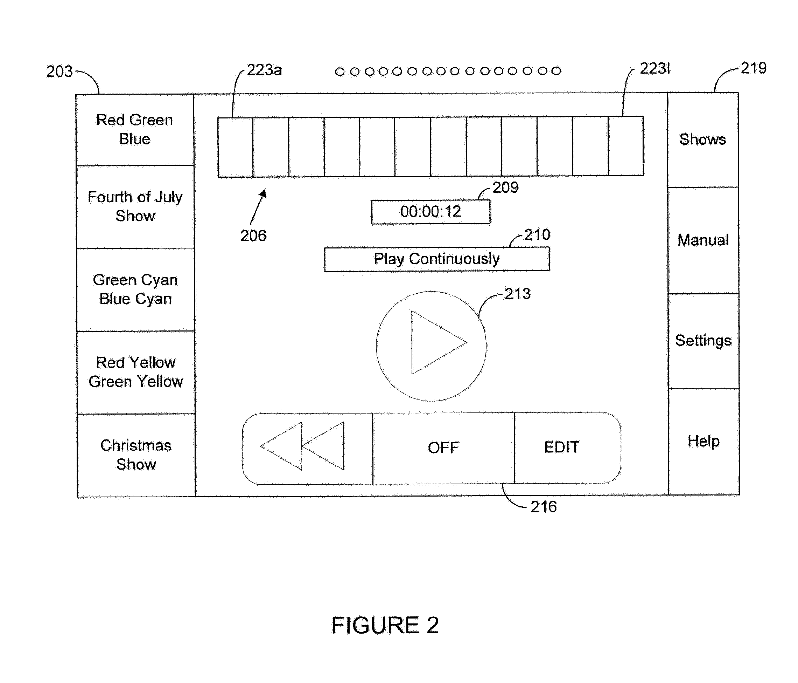

FIG. 2 is a user interface rendered on a display 106 associated with the controller. The user interface includes a saved shows panel 203, a preview bar 206, a duration field 209, a continuity field 210, a play button 213, playback control panel 216, and an options panel 219. In one embodiment, the saved shows panel 203 depicts previously saved light shows. For example, the previously saved light shows may be identified by a descriptive name, such as the colors displayed by the lighting fixtures 113, a theme of the light show, and/or any other name. Each of the previously saved light shows depicted in the saved shows panel 203 may be individually selected by a user. For instance, the user may provide an input via one of the input devices 109 or by manipulating the user interface via the display 103 to select one of the previously saved light shows. In response, the controller 106 may render the selected light show in the preview bar 209.

The preview bar 206 depicts the light show over a period of time. For example, the preview bar 206 depicts a plurality of steps 223 that each correspond to a respective color and a respective amount of time. As discussed below, each step may be uniquely shaded to indicate that a different color is displayed by the lighting fixtures 113 during that portion of the light show. The duration field 209 displays a length of the light show. For instance, the preview bar 206 depicts a light show that is 12 seconds in duration. Each step 223 may be individually configured to be associated with a specified color, duration and intensity. Additionally, each step 223 may be represented in the preview bar 206 based on the color and duration associated with the respective step 223. For instance, if a step 223 is associated with a blue color and has a duration that corresponds to 10% of the duration of the light show, then the respective step 223 will occupy 10% of the preview bar and be represented in the blue color.

In this example, the preview bar 206 depicts a light show with twelve steps 223a, 223b, 223c, 233d, 233e, 233f, 233g, 233h, 233i, 233j, 233k and 2331. Each one of the steps 223 in the preview bar 206 is associated with the same duration and a color. In some instances, the color of each of the steps 223 may be unique relative to the other steps 233. In some instances, a subset of the steps 223 may share the same color. Accordingly, the preview bar 206 includes twelve steps 223 of equal size where each step 223 may be represented by a respective color. The colors associated with each step 223 may correspond to a color provided by a user input or may be an intermediary color. When the play button 213 is invoked, the light show previewed in the preview bar 206 is displayed by the lighting fixtures 113. In this example, the light show is played back continuously as indicated by the continuity field 210.

Additionally, the playback control panel 216 may include one or more options for the user to manage playback of the light show. For example, the playback control panel 216 may include an option to traverse the light show, turn off the preview bar 206, edit the light show depicted by the preview bar 206, create a new light show, and/or other options related to the light show. The options panel 219 may include one or more options for accessing various functionalities offered by the light show management system 100 such as a shows button for accessing the previously saved light shows, a manual button for manually creating and/or editing a light show, a settings button for accessing various settings related to the components of the light show management system 110, a help button for accessing a guide, and/or other buttons. In one embodiment, a user may manipulate the playback control panel 216 and the options panel 219 via one or more input devices 109 and/or the display 106.

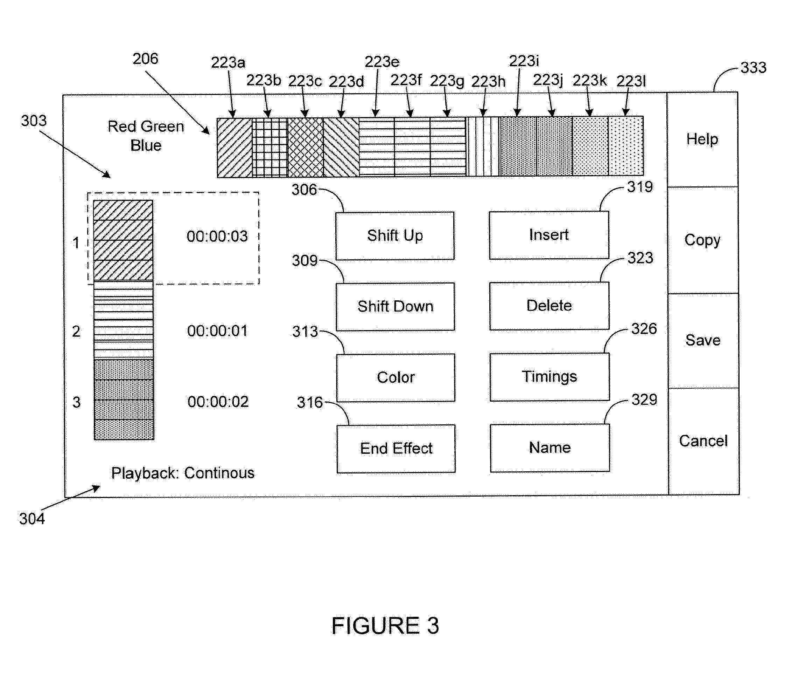

FIG. 3 illustrates one example of a user interface rendered on the display 106 if a user selects to edit a light show. In one embodiment, the user interface includes the preview bar 206, a transition panel 303, a continuity indicator 304, a shift up button 306, a shift down button 309, a color button 313, an end effect button 316, an insert button 319, a delete button 323, a timings button 326, a name button 329, and an edit panel 333. In this example, the preview bar 206 depicts a preview of a light show entitled "Red Green Blue," a descriptive name where the lights displayed by the lighting fixtures 113 transitions from red to green to blue over the course of the light show. The user interface of FIG. 3 allows the user to edit the light show, such as, for example, by adjusting the colors, the duration of each color, the length of time for transitioning between colors, adding and/or deleting steps 223 to the light show, and/or otherwise edit the light show.

The transition panel 303 provides for the user to adjust a transition time that elapses while the lighting fixtures 113 transition to another color. For example, the lighting fixtures 113 may transition to another color specified by the user. A transition time of zero indicates that the lighting fixtures 113 change the color between a first and second color quickly and without displaying any intermediate colors determined by the controller. A longer transition time indicates that the lighting fixtures 113 change the color from the first to the second color in a more gradual and/or linear manner. For example, intermediary colors appearing in the color spectrum between the first and the second color may be displayed by the lighting fixtures 113 during the transition.

In this example, the transition panel 303 denotes the three specified colors of the light show (i.e., red, green and blue). The user may select any one of the specified colors and adjust the transition time for transitioning between the specified colors. For example, the user may indicate that the transition time for changing the color of the displayed light from the first color (i.e., red) to the second color (i.e., green) to be three seconds, as shown in FIG. 3. In response, the controller 103 defines the light show such that the lighting fixtures 113 gradually change the color of the light being displayed from red to green over a span of three seconds. Additionally, the preview bar 206 may be dynamically refreshed to depict the colors displayed by the lighting fixtures 113 during the three second transition from the first color to the second color. For instance, colors appearing on the color spectrum between the first color and the second color may be displayed by the lighting fixtures 113 during the transition and therefore are depicted in the preview bar 206. Thus, the preview of the light show may be dynamically updated based on the inputs provided via the user interface to preview a light show without actual play back of the light show.

In one embodiment, the controller 103 identifies the intermediary colors based on colors appearing on the color spectrum between the first color and second color based on a linear approximation. As mentioned, the transition between the first and second color may be linear over the course of the specified transition time. The controller 103 may determine which colors are to be displayed by the lighting fixtures 113 by linearly approximating the colors that correspond to a linear change in wavelength for transitioning to the second color, as can be appreciated by one of skill in the art. For example, each one of the lighting fixtures 113 may be one or more LEDs. To achieve a change in the color of the light being displayed by the LED from red to green, the current being supplied to the red LED may be decreased while the current being supplied to the green LED is increased to achieve the wavelength that corresponds to green. This adjustment in current may be a linear adjustment occurring over a period that corresponds to the transition time. Colors on the spectrum having a wavelength between the red and green colors may thus be displayed by the lighting fixtures 113 as the current through the LEDs is adjusted. These colors on the spectrum that have a wavelength between the red and green colors are intermediary colors, a portion of which are displayed by the lighting fixtures 113 during the transition from red to green. In one embodiment, the intermediary colors to be displayed by the lighting fixtures 113 may be represented in the preview bar by the steps 223.

In this example, the duration of the first color (i.e., red) may have been previously defined to be one second and each step 223 of the light show may be one second in duration. Thus, one step 223a in the light show may be associated with the first color. To implement the three second transition, the controller 113 defines the light show such that the lighting fixtures start transitioning to the second color after displaying the first color for one second. The light show then transitions to the second color (i.e. green) over the next three seconds such that the lighting fixtures 113 display the second color after the fourth second of the light show. For instance, step 223a may correspond to the first color which is displayed for the length of one step and steps 223b, 223c and 223d correspond to colors for transitioning to the second color. In one embodiment, the controller 103 determines intermediary colors that correspond to the steps 223b, 223c and 223d for the lighting fixtures 113 to display while transitioning from the first color to the second color. In one embodiment, the controller 113 determines the intermediary color for each of the steps 223b, 223c, and 223d based on known colors of the adjacent steps. For instance, the color of step 223a and 223e are known (red and green, respectively). The controller 103 may determine the color of step 223c to be a color on the color spectrum occurring half the distance between the first and second colors based at least in part on the location of step 223c occurring half the distance between step 223a and 223e on the preview bar 206. Similarly, the controller 103 may determine the color of step 223b to be a color on the color spectrum occurring half the distance between the first color of step 223a and the intermediary color of 223c, and so on. As another example, the controller 103 may determine the color of step 223b to be a color on the color spectrum occurring at a third of the distance between the color of step 223a and the color step 223e.

It will be readily apparent to one skilled in the art that the transition from one color to the next could also be defined by the user to be a non-linear transition (e.g. logarithmic), and a wide variety of methods are available to adjust the intensity of the different colored LEDs or change the color or intensity output of the lighting fixtures (e.g. variable DC current, PWM, PAM, PLC, etc) in response to the light show programming.

Returning to the transition panel 303, the transition time from the second color (i.e. green) to the third color (i.e. blue) may be one second. Additionally, the continuity indicator 304 indicates that the light show represented in the preview bar 206 be played continuously. Thus the transition time from the third color back to the first color (i.e. red) may also be two seconds. The transition time between each of the colors of the light show may be individually configurable via one or more input devices 109 or a touch interface on the display 106. The controller 103 may determine the intermediary colors displayed by the lighting fixtures 113 during the transition from the second color to the third color and during the transition from the third color to the first color using a similar approach, as discussed herein.

The controller 103 associates the second color (i.e. green) to step 223e as previously mentioned. As indicated in the transition panel 303, the transition time for transitioning between the second color to the third color is one second. Assuming that the duration of the second color is four seconds, the controller 103 defines the light show such that the lighting fixtures 113 display the second color for three seconds (steps 223e, 223f and 223g) and display an intermediary color for one second (step 223h) while transitioning to the third color. Accordingly, the lighting fixtures 113 display the third color (at step 223i) four seconds after starting the display of the second color while transitioning to the third color in one second (step 223h). The third color (i.e., blue) is displayed by the lighting fixtures 113 eight seconds into the light show because the duration of the first two colors were defined to be four seconds each. The controller 103 defines the light show such that step 223i corresponds to the third color which occurs at the eight second point in the light show. The transition time for the third color is two seconds. Accordingly, the controller 103 defines the light show such at the third color is displayed by the lighting fixtures for two seconds (steps 223i and 223j) before transitioning back to the first color. In one embodiment, the controller determines intermediary colors to be displayed during the transition from the third color to the first color. For instance, steps 223k and 2231 may each correspond to an intermediary color as determined by the controller 103.

The shift up button 306 and the shift down button 309 may be invoked by the user to adjust the position of one of the steps 223 in the preview of the light show. For example, the user may modify the order of the steps 223 to adjust an order of the colors being displayed by the lighting fixtures 113. Additionally, the insert button 319 and the delete button 323 may be invoked by the user to add and remove, respectively, steps 223 in the preview of the light show. For instance, the user may wish to remove one of the steps 223 of the preview bar 206. The timings button 326 may be invoked to adjust the duration of the light show and/or the duration that the lighting fixtures 113 display one of the specified colors. Adjusting the duration of the light show may result in a change in the number of steps 223 or a change in the length of each step 223 of the light show. Additionally, invoking the name button 329 may change the name of the light show and invoking the end effect button 316 may end an effect implemented by the lighting fixtures 113. For instance, the lighting fixtures 113 may be configured to implement lighting effects such as fade out, fade in, strobe effect, intensity adjustments, and/or other effects.

The color button 313 may be invoked to adjust one or more colors of the light show. In one embodiment, the user may individually select one of the steps 223 and adjust the color associated with the selected step. In some instances, adjusting a color of one of the steps 223 may alter the transition from a first color to a second color. For example, the original color of one of the steps 223 may have been determined based on the transition time between the first and second colors, as discussed above. The user may adjust a light show color such that the controller 103 dynamically alters the preview bar 103 to depict a preview of the light show with adjusted intermediary colors based on the adjusted light show color. In some embodiments, the adjusted light show color may not alter the intermediary colors such that the intermediary colors displayed by the lighting fixtures 113 during the transition from a first color to a second color over the span of the transition time may not be altered.

Additionally, the user interface includes the edit panel 333 for a user to access help menus, copy light shows, save a current light show, cancel any edits, and/or perform other functions. In some embodiments, the user interface may also include additional options for a user to adjust the speed of the light show and intensity of the lighting fixtures 113 while performing the light show.

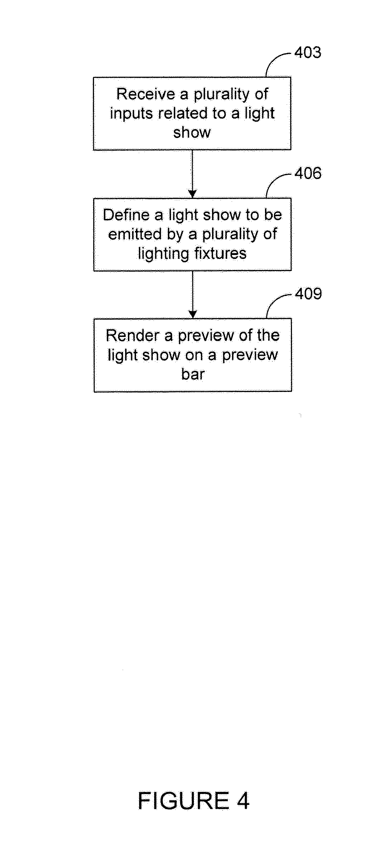

FIG. 4 is a flowchart that provides one example of the operation of a portion of the controller 103 according to certain embodiments. It is understood that the flowchart of FIG. 4 provides merely an example of the many different types of functional arrangements that may be employed to implement the operation of the portion of the controller 103. As an alternative, the flowchart of FIG. 4 may be viewed as depicting an example of steps of a method implemented by the controller 103 according to one or more embodiments.

Beginning at step 403, the controller receives a at least one input related to a light show. For example, a user may provide the inputs via one or more input devices 109 and/or a touch screen associated with a display 106. The inputs related to the light show may include one or more colors to be displayed during the light show, transition times for transitioning between the colors to be displayed during the light show, a duration for the light show, an intensity of the colors displayed during the light show, whether to play the light show continuously, and/or other inputs related to the light show. In one embodiment, the user may provide the inputs related to the light show by accessing one or more user interfaces rendered on the display device. For example, the user may manipulate one or more user interfaces to provide the inputs, as discussed above with respect to FIGS. 2 and 3.

Next, in step 406, the controller 103 defines the light show that is to be displayed by at least one lighting fixture 113 communicatively coupled to the controller 103. In one embodiment, the light show may be defined at least in part by the light show colors provided by the user and the transition times to transition between the light show colors. The controller 103 determines intermediary colors to be displayed by the lighting fixtures 113 during the transition between the light show colors provided the user. In one embodiment, the controller 103 determines the intermediary colors based at least in part on the transition time to transition between two of the light show colors. Additionally, the controller 103 defines the light show to have a duration as indicated by the inputs provided by the user. In some embodiments, the controller 103 may define the light show to include effects such as fade in, fade out, intensity, and/or other effects received by a user.

Then, in step 409, the controller 103 renders a preview of the light show in a preview bar on the display 106 associated with the controller 103. In one embodiment, the preview bar graphically represents the light show to be implemented by the light fixtures 113. For example, the preview bar may depict a sequence of colors to be displayed by the lighting fixtures 113 including the light show colors provided by the user and the intermediary colors determined by the controller 103. Additionally, the colors are depicted in the preview bar proportionally with respect to the duration of the light show. For instance, length of a color in the preview bar may correspond to a proportion of the duration of the respective color relative to the duration of the complete light show.

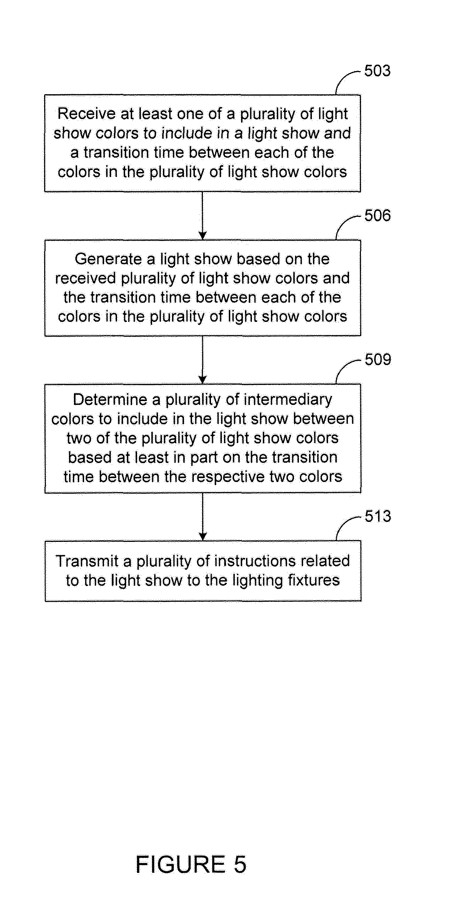

FIG. 5 is a flowchart that provides one example of the operation of a portion of the controller 103 according to certain embodiments. It is understood that the flowchart of FIG. 5 provides merely an example of the many different types of functional arrangements that may be employed to implement the operation of the portion of the controller 103. As an alternative, the flowchart of FIG. 5 may be viewed as depicting an example of steps of a method implemented by the controller 103 according to one or more embodiments.

Beginning at step 503, the controller 103 receives at least one light show color to include in a light show and a transition time between each of the light show colors. In one embodiment, a user may provide the light show colors and the transition times via one or more input devices 109 and/or a touch screen associated with a display 106. For example, the user may manipulate a user interface rendered on the display 106 to provide the input. In some embodiments, the controller 103 may also receive other inputs related to the light show. For instance, the controller 103 may receive input related to a duration of the light show, a duration for displaying each light show color, an intensity value, and/or any other inputs related to the light show.

Next, in step 506, the controller 103 generates a light show based on the received at least one light show color and the transition time between each of the light show colors. In one embodiment, the controller 103 generates the light show to be a sequence of colors including the received light show colors and at least one of intermediate color to be displayed by the lighting fixtures 113 during the transition between one light show color to another light show color. Additionally, each color in the sequence of colors may be associated with a duration during which the respective color will be displayed by the lighting fixtures 113 during play back of the light show.

In step 509, the controller 103 determines at least one intermediate color to include in the light show between two of the light show colors based at least in part on the transition time between the respective two of the light show colors. The determined intermediate colors will be displayed by the lighting fixtures 113 during the transition from each light show color to a next light show color. In one embodiment, if the transition time to transition between a first light show color to a second light show color is not specified, then the controller 103 determines that there are no intermediary colors to be displayed by the lighting fixtures 113 during the transition between the first and second light show colors. If the transition time to transition between the first light show color and the second light show color is more than zero, then the controller 103 identifies at least one intermediary color to be displayed by the lighting fixtures 113 during the transition between the first light show color and the second light show color.

In one embodiment, the controller 103 determines the intermediary colors based on the magnitude of the transition time and a difference between the first light show color and the second light show color. For instance, the controller 103 implements a linear transition from the first light show color to the second light show color over the span of the transition time.

The controller 103 identifies the intermediary colors to be displayed by the lighting fixtures 113 during the transition from the first light show color to the second light show color to be those colors appearing in the spectrum between the first light show color and the second light show color. For example, the controller 103 may instruct that a color appearing at half the distance on the spectrum between the first light show color and the second light show color be displayed by the lighting fixtures 113 when half of the transition time has elapsed. Similarly, the controller 103 may indicate that a color appearing at a quarter of the distance on the spectrum between the first light show color and the second light show color be displayed by the lighting fixtures 113 when a quarter of the transition time has elapsed, and so on.

Then, in step 513, the controller 103 transmits one or more instructions related to the light show to the lighting fixtures 113. In one embodiment, the controller 103 may transmit instructions for displaying colors for certain times and for certain durations based on the light show. In another embodiment, the controller 103 may individually transmit at least one instruction to the lighting fixtures 113 based related to a color to be displayed and/or an effect to be applied. The controller 103 may then transmit a next instruction related to the color and/or effect based on a duration and transition time, as described herein.

The foregoing is provided for purposes of illustrating, describing, and explaining aspects of the present invention and is not intended to be exhaustive or to limit the invention to the precise forms disclosed. Further modifications and adaptation of these embodiments will be apparent to those skilled in the art and may be made without departing from the scope and spirit of the invention. Different arrangements of the components depicted in the drawings or described above, as well as components and steps not shown or described are possible. For example, although the figures illustrate that each of the steps is equal in width, the steps may have variable widths and represent different durations. Similarly, some features and subcombinations are useful and may be employed without reference to other features and subcombinations. Embodiments of the invention have been described for illustrative and not restrictive purposes, and alternative embodiments will become apparent to readers of this patent. For example, the physical layout of the displays and the ways of inputting colors may differ from those described herein.

## Claims

1. A light show management system comprising:
at least one of lighting fixture; and
a controller for managing the at least one lighting fixture, the controller configured to:
receive at least one input associated with a light show;
generate the light show to be displayed by the at least one lighting fixture based at least in part on the at least one input associated with the light show; and
display, on a display device associated with the controller, a preview bar that depicts a preview of the light show to be displayed by the at least one lighting fixture, the preview bar comprising at least one step, the at least one step having a duration.

2. The system of claim 1, wherein the controller is further configured to transmit at least one instruction related to the light show to the at least one lighting fixture to display the light show and/or further configured to manage the lightshow by adjusting at least one of a speed and duration of the light show.

3. The system of claims 1 or 2, wherein the at least one input comprises an input related to at least one of an intensity of light displayed by the at least one lighting fixture, a duration for displaying the light by the at least one lighting fixture, and a color of light displayed by the at least one lighting fixture.

4. The system of any preceding claim, wherein each step of the preview bar corresponds to an amount of time for the at least one lighting fixture to display a color associated with the respective step.

5. The system of claim 4, wherein each step of the at least one step corresponds to at least one of a color in a spectrum.

6. The system of claim 5, wherein the controller is further configured to determine the color of the spectrum that corresponds to each step of the at least one step based at least in part on a transition time between two light show colors.

7. A method for managing a light show comprising:
receiving, via one or more input devices, at least one input related to a light show;
defining, via a controller, a light show to be displayed by at least one lighting fixture; and
rendering, on a display device associated with the controller, a preview of the light show on a preview bar.

8. The method of claim 7, wherein the at least one input comprise at least one of an indication of one or more colors, a duration, an intensity, and one or more transition times between the one or more colors and/or wherein the preview bar comprises at least one step, the at least one step corresponding to a color in a color spectrum.

9. The method of claims 7 or 8, wherein defining the light show comprises generating a sequence of colors to be displayed by the at least one lighting fixture, the sequence of colors comprising at least one color received via the one or more input devices.

10. The method of claim 9, wherein defining the light show further comprises identifying at least one intermediary color between each color in the sequence of colors based at least in part on a transition time received via the one or more input devices.

11. The method of claim 10, wherein the at least one intermediate color corresponds to a color appearing in between the adjacent colors in the sequence of colors and/or wherein the at least one intermediate color is determined based on a transition time between the adjacent colors in the sequence of colors.

12. The method of any of claims 7 to 11, further comprising rendering, on the display device, a user interface for editing the light show.

13. The method of claim 12, wherein editing the light show comprises editing at least one of a duration of the light show, a sequence of colors in the light show, and the colors in the sequence of colors of the light show.

14. A controller configured to:
render a preview of a light show on a display device communicatively coupled to the controller, the preview being depicted in a preview bar included in a user interface rendered on the display device; and
transmit, to at least one lighting fixture, at least one instruction related to the light show, the light show comprising at least a sequence of colors and timing information related to the sequence of colors.

15. The controller of claim 14, further configured to receive at least one input related to the light show, the at least one input received via one or more input devices communicatively coupled to the controller and/or to render a user interface on the display device for editing the light show.
